# EUROPÄISCHE PATENTSCHRIFT

(11) **EP 2 012 201 B1**
(45) Veröffentlichungstag und Bekanntmachung des Hinweises auf die Patenterteilung: **19.10.2011**
(21) Anmeldenummer: 07013210.5
(22) Anmeldetag: 05.07.2007
(51) Int. Cl.: G05B 19/042

(54) **Verfahren zum Programmieren einer Sicherheitssteuerung**
Method for programming a safety control device
Procédé destiné à la programmation d'une commande de sécurité

(43) Veröffentlichungstag der Anmeldung: 07.01.2009
(73) Patentinhaber: SICK AG, 79183 Waldkirch (DE)
(72) Erfinder: Dold, Franz Josef, 78120 Furtwangen (DE); Weddingfeld, Klaus, 79183 Waldkirch (DE)
(74) Vertreter: Manitz, Finsterwald & Partner GbR

(56) Entgegenhaltungen:
- EP-A- 1 362 269
- US-A1- 2001 056 306
- US-A1- 2006 190 105

## Beschreibung

Die Erfindung betrifft ein Verfahren zum Programmieren einer mit Gebern und Aktoren zu verschaltenden Sicherheitssteuerung.

Ein derartiges Verfahren ist aus EP 1 362 269 B1 bekannt. Bei diesem bekannten Verfahren werden im Rahmen eines Programmiervorgangs jeweils benötigte Programmmodule ausgewählt und zu einem Programm zusammengestellt, welches für den Betrieb einer Sicherheitssteuerung geeignet ist. Um die Übersichtlichkeit beim Programmieren zu erhöhen und Programmierfehler zu vermeiden, werden die auswählbaren Programmmodule auf einer Programmieroberfläche dargestellt und beispielsweise mittels Drag-and-Drop einer von drei Funktionsgruppen zugeordnet, wobei jede Funktionsgruppe einem bestimmten Bildschirmbereich der Programmieroberfläche entspricht. Die erste Funktionsgruppe ist dabei einer Eingangsauswertung, die zweite einer Logikverarbeitung und die dritte einer Ausgangsansteuerung zugeordnet.

Die US 2001/056306 A1 offenbart einen Controller, an diesem anzuschließende Peripheriegeräte sowie eine bildschirmgestützte Entwicklungsumgebung, die der Programmierung des Controllers dient. Die einzelnen Peripheriegeräte werden als Icons auf einer graphischen Oberfläche der Entwicklungsumgebung dargestellt und vom Benutzer gemäß der gewünschten Anwendung verknüpft. Die entwickelten Programmmodule und vordefinierte, den jeweiligen Peripheriegeräten zugeordnete Softwareuntermodule werden zur Ausführung an den Controller übermittelt. Programmierfehler werden gemäß Stand der Technik insbesondere dadurch reduziert, dass Programmmodule, die für die Auswertung von Eingängen geeignet sind, nur der Funktionsgruppe Eingangsauswertung, Programmmodule, die für die Logikverarbeitung geeignet sind, nur der Funktionsgruppe Logikverarbeitung und Programmmodule, die für die Ansteuerung von Ausgängen geeignet sind, nur der Funktionsgruppe Ausgangsansteuerung zugeordnet werden können, so dass hier Fehlzuordnungen vermieden werden.

Nachteilig an dem bekannten Verfahren ist die Tatsache, dass auch für die Realisierung von sehr einfachen Funktionen für die Auswertung jedes einzelnen Eingangs der Sicherheitssteuerung ein separates Programmmodul ausgewählt und zugeordnet werden muss, wobei dies in gleicher Weise für die Ansteuerung jedes einzelnen Ausgangs gilt. Somit wird das Gesamtprogramm durch die hohe Anzahl der auszuwählenden Programmmodule oftmals unübersichtlich. Insbesondere lassen sich bei der Realisierung von komplexen Funktionen nicht mehr alle ausgewählten Programmmodule auf einer einzelnen Bildschirmseite der Programmieroberfläche darstellen.

Zudem wird dem Programmierer gemäß Stand der Technik im Rahmen der Programmieroberfläche ausschließlich die Struktur des zu erstellenden Programms veranschaulicht, wobei ihm keinerlei Informationen hinsichtlich der Verdrahtung zwischen der Sicherheitssteuerung einerseits und Gebern und Aktoren andererseits vermittelt werden.

Zudem ist das bekannte Verfahren nur mit Schwierigkeiten anwendbar, wenn Sicherheitssteuerungen zu programmieren sind, welche unterschiedliche, beispielsweise über Netzwerke miteinander kommunizierende Komponenten aufweisen, da die Programmieroberfläche nicht dazu geeignet ist, den Programmierer darüber zu informieren, an welcher physikalischen Position im Gesamtsystem sich ein bestimmter Eingang oder ein bestimmter Ausgang der Sicherheitssteuerung befindet.

Eine Aufgabe der Erfindung besteht darin, ein Verfahren der eingangs genannten Art bereitzustellen, welches einerseits das jeweils gewünschte Programm konfiguriert und/oder erstellt, andererseits aber gleichzeitig Informationen hinsichtlich der vorzunehmenden Verdrahtung von Sicherheitssteuerung, Gebern und Aktoren liefert. Dabei soll insbesondere das Konfigurieren und/oder Erstellen des Programms auf einfache und übersichtliche Art und Weise ermöglicht werden, so dass Fehler weitestgehend ausgeschlossen werden. Schließlich soll vorzugsweise auch ermöglicht werden, Programme für Sicherheitssteuerungen bereitzustellen, die aus mehreren, dezentral angeordneten Programmteilen bestehen, ohne dass hierunter die Übersichtlichkeit beim Konfigurieren und/oder Erstellen des Programms leidet.

Erfindungsgemäß wird diese Aufgabe gemäß einer ersten Variante dadurch gelöst, dass zuerst ein Verdrahtungsplan erstellt wird, indem
- die Sicherheitssteuerung mit ihren Anschlussklemmen zumindest schematisch auf einer graphischen Programmieroberfläche dargestellt wird,
- Geber und Aktoren anhand von Geber- und Aktorsymbolen ausgewählt werden, und
- Verdrahtungssymbole auf der Programmieroberfläche dargestellt werden, welche die Geber- und Aktorsymbole mit den ihnen zugeordneten Anschlussklemmen verbinden,
woraufhin ein Programm konfiguriert und/oder erstellt wird, indem
- automatisch Programmteile aktiviert und/oder zusammengestellt werden, die für die Auswertung der ausgewählten Geber und die Ansteuerung der ausgewählten Aktoren vorgesehen sind, und
- diesen Programmteilen automatisch Parameter zugeordnet werden, welche denjenigen Anschlussklemmen entsprechen, mit denen die jeweiligen Geber- und Aktorsymbole verbunden sind.

Im Unterschied zum Stand der Technik wird also erfindungsgemäß in einem ersten Schritt unter Nutzung einer grafischen Programmieroberfläche lediglich ein Verdrahtungsplan erstellt, welcher angibt, welche Anschlussklemmen der Sicherheitssteuerung mit welchen Gebern und Aktoren verdrahtet werden sollen. Aufgrund dieses Verdrahtungsplans ist es bereits bekannt, welche Geber und Aktoren für die jeweilige Anwendung eingesetzt werden, so dass mittels des erfindungsgemäßen Verfahrens in einem zweiten Schritt nach dem Erstellen des Verdrahtungsplans automatisch diejenigen Programmteile programmiert werden können, die dafür vorgesehen sind, die ausgewählten Geber auszuwerten und die ausgewählten Aktoren anzusteuern. Darüber hinaus ist es aufgrund der vorgenommenen Verdrahtung auch bereits bekannt, mit welchen konkreten Anschlussklemmen die ausgewählten Geber und Aktoren zu verbinden sind, so dass in den genannten Programmteilen automatisch Parameter gesetzt werden können, die den jeweiligen Anschlussklemmen entsprechen.

Es ist erfindungsgemäß also in Kenntnis des Verdrahtungsplans bereits möglich, in komplett automatisierter Weise Programmteile zu programmieren und diese auch hinsichtlich der ausgewählten Anschlussklemmen zu parametrieren, so dass derjenige Programmbereich, der für die Auswertung der Geber und die Ansteuerung der Aktoren zuständig ist, praktisch vollautomatisch programmiert wird. Es ist dann lediglich in einem weiteren Schritt noch möglich, in geeigneter Weise festzulegen, wie ausgewertete Gebersignale logisch miteinander verknüpft werden sollen und welchen Aktoren die Verknüpfungsergebnisse zuzuordnen sind (Logikprogrammierung).

Im Rahmen der Erfindung wird also erreicht, dass alleine durch das grafisch unterstützte Erstellen eines Verdrahtungsplans bereits wesentliche Teile des Programms für den Betrieb der Sicherheitssteuerung programmiert werden, ohne dass der Programmierer hierfür zusätzliche Schritte ausführen muss. Dies führt zum einen zu einer wesentlich erhöhten Wirtschaftlichkeit des gesamten Verfahrens, zum anderen wird durch die genannte Automatisierung erreicht, dass eine fehlerfreie Erzeugung der automatisiert erstellten Programmteile sichergestellt ist.

Anders als beim eingangs zitierten Dokument EP 1 362 269 B1 ist mit dem Begriff des Programmierens im Rahmen der Erfindung sowohl das Erstellen eines Programms als auch das Konfigurieren eines Programms gemeint. Beim Erstellen eines Programms werden beispielsweise unterschiedliche vorgefertigte Programmteile zu einem Programm zusammengestellt, beim Konfigurieren eines Programms wird beispielsweise durch das Setzen von Parametern festgelegt, welche Zweige eines zuvor bereits erstellten Programms zu aktivieren bzw. abzuarbeiten sind. Der Begriff Programmieren im Sinne dieser Erfindung umfasst auch eine Kombination aus Erstellen und Konfigurieren eines Programms. Ferner ist mit Programmieren nicht zwingend die komplette Erstellung eines lauffähigen Programms für den Betrieb einer Sicherheitssteuerung zu verstehen, vielmehr ist auch das lediglich teilweise Erstellen oder Konfigurieren eines solchen Programms mit umfasst.

Erfindungsgemäße Programmteile, die für die Auswertung der ausgewählten Geber zuständig sind, übernehmen zum Beispiel die Konvertierung eines vom Geber gelieferten zweikanaligen (ambivalenten oder äquivalenten) Signals in ein einzelnes Signal oder eine Wandlung eines analogen in ein digitales Signal, welches dann im Rahmen einer Logikverknüpfung weiterverarbeitbar ist. Ebenso können solche Programmteile z.B. von Gebern gelieferte Testsignale auswerten oder dafür sorgen, dass geeignete Testsignale an einen Geber gesandt werden.

Programmteile die für die Ansteuerung der ausgewählten Aktoren zuständig sind, können beispielsweise von einer Logikverknüpfung oder einem Steuerungseingang gelieferte einzelne Signale in zweikanalige (ambivalente oder äquivalente), über zwei Ausgangsklemmen der Sicherheitssteuerung auszugebende Signale konvertieren. Ebenso kann z.B. eine Anpassung der elektrischen Signaleigenschaften vorgenommen werden, oder es kann eine Wandlung eines digitalen Signals in ein analoges Signal erfolgen.

Besonders bevorzugt ist es im Rahmen der Erfindung, wenn die Relativpositionen der auf der grafischen Programmieroberfläche dargestellten Anschlussklemmen deren tatsächlichen physikalischen Relativpositionen entsprechen. Vorteilhaft ist es dabei, wenn ein komplettes physikalisches Abbild der Sicherheitssteuerung mit ihren Anschlussklemmen auf der grafischen Programmieroberfläche dargestellt wird. Durch diese Maßnahmen wird erreicht, dass dem Programmierer bereits beim Erstellen des Verdrahtungsplans in sehr anschaulicher Weise klar wird, welche Anschlussklemmen jeweils zu kontaktieren sind, da die auf der Programmieroberfläche sichtbaren Anschlussklemmen exakt in der gleichen Weise angeordnet sind, wie sie an der gegenständlich und physikalisch vorhandenen Sicherheitssteuerung angebracht sind.

Der erfindungsgemäße Programmiervorgang, der sich für den Programmierer im Prinzip im Erstellen des Verdrahtungsplans erschöpft, kann auf beliebigen Programmiergeräten durchgeführt werden. Beispielsweise bietet sich der Einsatz von PCs, Laptops oder Handheld-Geräten an.

In besonders übersichtlicher Weise lässt sich der Programmiervorgang durchführen, wenn eine Menge von verfügbaren Geber- und/oder Aktorsymbolen auf der Programmieroberfläche dargestellt wird und aus dieser Menge diejenigen Geber- und/oder Aktorsysmbole ausgewählt werden, welche den jeweils benötigten Gebern und/oder Aktoren entsprechen. Eine solche Auswahl kann beispielsweise mittels Drag and Drop oder mittels eines Pull-Down-Menüs erfolgen. Nach der Auswahl werden die Symbole dann in den Bereich derjenigen Anschlussklemmen der auf der Programmieroberfläche dargestellten Sicherheitssteuerung gezogen, an die entsprechenden Geber/Aktoren angeschlossen werden sollen. Anschließend kann dann nach erfolgter Auswahl bzw. Positionierung der Geber-und/oder Aktorsymbole automatisch die jeweils erforderliche Verdrahtung zwischen Gebern und/oder Aktoren einerseits und Sicherheitssteuerung andererseits auf der Programmieroberfläche dargestellt werden. In üblicher Weise wird eine solche Verdrahtung mittels einfacher, linienförmiger Verdrahtungssymbole visualisiert. Es sind jedoch auch beliebige andere Visualisierungsmöglichkeiten denkbar, solange sichergestellt ist, dass dem Programmierer ersichtlich wird, welche Anschlussklemmen der Sicherheitssteuerung mit welchen Gebern bzw. Aktoren elektrisch kontaktiert werden müssen.

Die auf der Programmieroberfläche dargestellten Anschlussklemmen der Sicherheitssteuerung können alle an einer einzelnen, in einem einzigen Gehäuse untergebrachten Steuerungskomponente vorgesehen sein. Es ist jedoch auch möglich, dass die dargestellten Anschlussklemmen der Sicherheitssteuerung mehreren physikalisch voneinander getrennten Einheiten bzw. Modulen zugeordnet sind. Derartige getrennte Einheiten sind dann bevorzugt kommunizierend miteinander verbunden, wobei eine solche Verbindung beispielsweise mittels eines Feldbus oder einer Backplane (Karte mit verschiedenen Steckplätzen) realisiert werden kann. Physikalisch voneinander getrennte aber kommunizierend miteinander verbundene Einheiten der Sicherheitssteuerung können beliebige Aufgaben übernehmen wobei die Einheiten nicht zwangsläufig aktiv intelligente Steuerungsaufgaben übernehmen müssen. Beispielsweise ist es möglich, separate Einheiten vorzusehen, die lediglich physikalische Ein- und Ausgänge der Sicherheitssteuerung bereitstellen.

Besonders vorteilhaft ist es, wenn nach dem Erstellen des Verdrahtungsplans ein Ausdrucken oder Anzeigen dieses Plans erfolgt, wobei auf dem Plan sämtliche Anschlussklemmen von Sicherheitssteuerung, Gebern und Aktoren, jeweils entsprechend ihrer physikalischen Anordnung, einschließlich der gewählten Verbindungen dieser Anschlussklemmen dargestellt sind. Von Vorteil ist es, wenn die Anschlussklemmen zudem auf dem Verdrahtungsplan mit ihrer jeweils physikalisch am Gerät vorhandenen Bezeichnung bzw. Kennzeichnung versehen sind. Aufgrund des genannten Plans ist der Fachmann dann dazu in der Lage, ohne irgendwelche weiteren Informationen eine komplette und korrekte Verdrahtung von Sicherheitssteuerung, Gebern und Aktoren vorzunehmen, wobei dies insbesondere auch dann gilt, wenn die Sicherheitssteuerung aus mehreren dezentralen Komponenten besteht, die dann dementsprechend auf dem Plan ebenfalls getrennt voneinander dargestellt werden.

Es kann auch zuerst eine physikalische Verdrahtung der Anschlussklemmen der Sicherheitssteuerung mit den jeweils benötigten Gebern und Aktoren vorgenommen werden, woraufhin von einem Programmiergerät erkannt wird, welche Geber und Aktoren verdrahtet wurden, und anschließend ein Programm konfiguriert oder erstellt werden, indem automatisch Programmteile aktiviert oder zusammengestellt werden, die für die Auswertung der verdrahteten Geber und die Ansteuerung der verdrahteten Aktoren vorgesehen sind, wobei diesen Programmteilen automatisch Parameter zugeordnet werden, welche denjenigen Anschlussklemmen entsprechen, mit denen die jeweiligen Geber und Aktoren verbunden sind.

Es kann also gleich direkt die physikalische Verdrahtung der Anschlussklemmen der Sicherheitssteuerung mit den jeweils benötigten Gebern und Aktoren vorgenommen werden, was sich insbesondere dann anbietet, wenn vergleichsweise wenige Komponenten miteinander zu verdrahten sind.

Die vorgenommene Verdrahtung und die angeschlossenen Geber und Aktoren werden dann automatisch von einem Programmiergerät erkannt, so dass dem Programmiergerät eine Information dahingehend vorliegt, welche Geber und welche Aktoren mit welchen Anschlussklemmen der Sicherheitssteuerung kontaktiert sind. Bei dem Programmiergerät kann es sich um ein externes Programmiergerät, beispielsweise einen PC, Laptop oder Handheld handeln, es ist jedoch ebenso möglich, die Sicherheitssteuerung selbst oder einen Teil der Sicherheitssteuerung als Programmiergerät auszubilden.

Durch das Programmiergerät wird anschließend dann in Kenntnis der vorgenommenen Verdrahtung und der angeschlossenen Geber und Aktoren ein Programm konfiguriert oder erstellt, wobei dies in der gleichen Weise vollzogen wird, wie bei der ersten erfindungsgemäßen Variante. Es werden also automatisch Programmteile aktiviert oder zusammengestellt, die für die Auswertung der bereits verdrahteten Geber und die Ansteuerung der bereits verdrahteten Aktoren vorgesehen sind, wobei diesen Programmteilen automatisch Parameter zugeordnet werden, welche denjenigen Anschlussklemmen der Sicherheitssteuerung entsprechen, die mit den bereits verdrahteten Gebern und Aktoren verbunden sind.

Mit der ersten erfindungsgemäßen Variante wird also die Verdrahtung zuerst theoretisch mittels eines geeigneten Programmiergeräts vorgenommen, so dass dem Programmiergerät ohnehin alle verwendeten Anschlussklemmen von Sicherheitssteuerung, Gebern und Aktoren bekannt sind. Besonders bevorzugt ist es, wenn jedem Geber und jedem Aktor in Form eines Datensatzes eine geber- oder aktorspezifische Elementbeschreibung zugeordnet ist, welche Eigenschaften des jeweiligen Gebers Besonders bevorzugt ist es, wenn jedem Geber und jedem Aktor in Form eines Datensatzes eine geber- oder aktorspezifische Elementbeschreibung zugeordnet ist, welche Eigenschaften des jeweiligen Gebers oder Aktors definiert. Im Rahmen einer solchen Elementbeschreibung kann in Form eines Datensatzes beispielsweise festgelegt werden, dass es sich bei einem bestimmten Geber um einen Notaus-Taster handelt, der auf zwei separaten Kanälen ambivalente Signale liefert und mit einem Testsignal versorgt werden muss. Wenn dem Programmiergerät in erfindungsgemäßer Weise eine solche Elementbeschreibung eines ausgewählten Gebers bekannt ist, kann während des Programmiervorgangs sichergestellt werden, dass der entsprechende Geber nur an jeweils geeignete Eingangsklemmen der Sicherheitssteuerung angeschlossen werden kann. Ein fehlerhafter Anschluss kann vom Programmiergerät von vorne herein nicht zugelassen werden oder es kann nach einem fehlerhaften Anschluss ein Warnsignal ausgegeben werden.

Die Elementbeschreibung kann jedoch darüber hinaus auch dazu dienen, den eigentlichen Programmiervorgang durchzuführen. Aufgrund der Elementbeschreibung ist nämlich grundsätzlich bekannt, welche Funktionen ein Programmteil ausführen muss, welcher für die Auswertung eines jeweiligen Gebers oder die Ansteuerung eines jeweiligen Aktors zuständig ist. Dementsprechend kann beispielsweise in Abhängigkeit von der Elementbeschreibung ein spezieller Programmteil aktiviert oder dem zu erstellenden Programm hinzugefügt werden, welcher die jeweils erforderlichen Funktionen für die Auswertung eines jeweiligen Gebers oder die Ansteuerung eines jeweiligen Aktors besitzt. Ebenso ist es jedoch möglich, dass aus der Elementbeschreibung Parameter abgeleitet werden, die einen geeigneten, im zu erstellenden Programm bereits vorhandenen Programmteil lediglich derart konfigurieren, dass er dazu geeignet ist, den jeweiligen Geber oder Aktor auszuwerten oder anzusteuern. Wenn im letztgenannten Fall beispielsweise ein Programmteil sowohl für eine einkanalige als auch für eine zweikanalige Auswertung geeignet ist, kann mittels eines aus der Elementbeschreibung abgeleiteten Parameters festgelegt werden, ob dieser Programmteil im konkreten Anwendungsfall eine einkanalige oder eine zweikanalige Auswertung durchführen soll.

Aufgrund der Elementbeschreibung kann also zum einen die vorgenommene Verdrahtung überprüft werden, zum anderen können auch die jeweils benötigten Programmteile ausgewählt, aktiviert oder konfiguriert werden. Derartigen Programmteilen können in der Folge dann vom Programmgerät in automatisierter Weise noch Parameter zugeordnet werden, die denjenigen Anschlussklemmen der Sicherheitssteuerung entsprechen, an die der jeweilige Geber oder Aktor angeschlossen ist. Dies ist nötig, da die aufgrund der Elementbeschreibung aktivierten oder konfigurierten Programmteile zwar grundsätzlich dazu geeignet sind, die für den jeweiligen Geber oder Aktor erforderlichen Funktionen auszuführen, wobei aber allein aufgrund der Elementbeschreibung noch nicht bekannt ist, an welche konkreten Anschlussklemmen der Sicherheitssteuerung die jeweiligen Geber oder Aktoren angeschlossen wurden. Diese Information liegt jedoch - wie bereits erwähnt - im Programmiergerät aufgrund des Verdrahtungsplans oder der bereits vorgenommenen Verdrahtung vor, so dass das Programmiergerät den aktivierten oder konfigurierten Programmteilen entsprechende Parameter zuordnen kann. Auf diese Weise wird sichergestellt, dass die korrekten Eingänge der Sicherheitssteuerung ausgewertet und die korrekten Ausgänge der Sicherheitssteuerung angesteuert werden.

Die Elementbeschreibungen können bereits zu Beginn des erfindungsgemäßen Verfahrens im Programmiergerät hinterlegt bzw. gespeichert sein. Alternativ ist es jedoch auch möglich, dass die Elementbeschreibungen in den zugehörigen Gebern und Aktoren gespeichert sind, von wo aus sie zum Zweck des Programmierens drahtgebunden oder drahtlos in das Programmiergerät übertragen werden. Bei dem Programmiergerät kann es sich wiederum um ein externes Gerät, beispielsweise einen PC, Laptop oder Handheld handeln. Zudem ist es aber auch möglich, die Sicherheitssteuerung selbst als Programmiergerät auszubilden. Im letztgenannten Fall ist es dann möglich, dass sich die Sicherheitssteuerung alleine aufgrund des Anschlusses der jeweils benötigten Geber und Aktoren praktisch selbst programmiert, zumindest soweit die Auswertung der Eingänge und die Ansteuerung der Ausgänge betroffen ist.

Die Elementbeschreibung der Geber kann zumindest eine der im Folgenden genannten geberspezifischen Informationen beinhalten:
Anzahl der auszuwertenden Kanäle,
Anforderungen an die anzuschließenden Eingangsklemmen der Sicherheitssteuerung,
Art der Auswertung (äquivalent/ ambivalent),
Testkonfiguration,
vorhandene Anschlussklemmen,
physikalische Anordnung der Anschlussklemmen,
Geberkennzeichnung.

Wenn die Elementbeschreibung Informationen über die Anzahl der auszuwertenden Kanäle beinhaltet, kann - wie bereits erläutert - eine fehlerhafte Verdrahtung bereits durch das Programmiergerät ausgeschlossen werden, da beispielsweise bei zwei auszuwertenden Kanälen eine Fehlermeldung erzeugt werden kann, wenn lediglich ein Kanal angeschlossen wird. Entsprechendes gilt, wenn die Elementbeschreibung Informationen über die Anforderungen an die anzuschließenden Eingangsklemmen der Sicherheitssteuerung beinhaltet. Aufgrund dieser Information kann vom Programmiergerät beispielsweise eine Fehlermeldung abgesetzt werden, wenn ein Analogwertgeber an einen Digitaleingang der Sicherheitssteuerung angeschlossen wird.

Die in der Elementbeschreibung gegebenenfalls vorhandene Information "Testkonfiguration" kann festlegen; mit wie vielen und/oder welchen Ausgangsanschlussklemmen der Sicherheitssteuerung der Geber zu verdrahten ist. Eine solche Elementbeschreibung ist grundsätzlich einem Geber zugeordnet, welcher von der Sicherheitssteuerung mit zumindest einem Testsignal versorgt werden muss, so dass ein solcher Geber nicht nur mit zumindest einer Eingangsanschlussklemme der Sicherheitssteuerung sondern auch mit zumindest einer Ausgangsanschlussklemme der Sicherheitssteuerung zu verdrahten ist.

Die Elementbeschreibung der Aktoren kann zumindest eine der im Folgenden genannten aktorspezifischen Informationen beinhalten:
Anzahl der anzusteuernden Kanäle,
Anforderungen an die anzuschließenden Ausgangsklemmen der Sicherheitssteuerung,
Art der Ansteuerung (äquivalent/ ambivalent),
vorhandene Anschlussklemmen,
physikalische Anordnung der Anschlussklemmen,
Aktorkennzeichnung.

Die in der Elementbeschreibung von Geber oder Aktor beinhaltete Information bezüglich der vorhandenen Anschlussklemmen und/oder der physikalischen Anordnung dieser Anschlussklemmen dient dazu, nach Erstellen des Verdrahtungsplans auch einen kompletten Verdrahtungsplan ausdrucken zu können, welcher nicht nur die Sicherheitssteuerung sondern auch alle ausgewählten Geber und Aktoren mit ihren jeweiligen Anschlussklemmen darstellt. Zudem wird es für bestimmte Anwendungsfälle auch für den Programmierer möglich, bei der Verdrahtung von Gebern und Aktoren mit der Sicherheitssteuerung bestimmte Anschlussklemmen von Gebern und Aktoren auszuwählen, sofern hier mehrere Möglichkeiten zur Verfügung stehen. Zudem können alle Anschlussklemmen der Geber und Aktoren im Verdrahtungsplan mit ihrer jeweils physikalisch am Gerät vorhandenen Bezeichnung bzw. Kennzeichnung versehen werden, sofern diese Bezeichnungen bzw. Kennzeichnungen Bestandteil der Anschlussklemmeninformation der Elementbeschreibung sind.

Die in der Elementbeschreibung von Gebern und Aktoren gegebenenfalls vorhandene Information "Anforderungen an die anzuschließenden Ein- bzw. Ausgangsklemmen der Sicherheitssteuerung können sowohl elektrische als auch physikalische Anforderungen betreffen. Elektrische Anforderungen definieren z.B. ob digitale oder analoge Signale übertragen werden oder mit welchen Strömen, Spannungen, Kapazitäten, etc. die jeweiligen Klemmen kompatibel sein müssen, um mit den jeweiligen Gebern oder Aktoren kommunizieren zu können. Physikalische Eigenschaften können z.B. Drahtquerschnitte oder Steckertypen der Geber- bzw. Aktorkabel definieren.

Die in der Elementbeschreibung von Gebern und Aktoren gegebenenfalls vorhandene Information "Geberkennzeichnung" bzw. "Aktorkennzeichnung" kann vom Programmierer in einer gewünschten Weise verändert werden, so dass hier eine jeweils passende verbale Beschreibung von Gebern und Aktoren wählbar ist.

Im Rahmen der Erfindung können nicht nur den Gebern und Aktoren Elementbeschreibungen zugeordnet werden, vielmehr ist es auch möglich, dass zumindest einem, bevorzugt jedem Modul der Sicherheitssteuerung in Form eines Datensatzes eine modulspezifische Elementbeschreibung zugeordnet ist, welche Eigenschaften des jeweiligen Moduls definiert. Eine solche Elementbeschreibung kann dazu dienen, zu überprüfen, ob ein mit bestimmten Gebern oder Aktoren verdrahtetes Modul auch die Eigenschaften besitzt, die jeweiligen Geber auszuwerten bzw. die jeweiligen Aktoren anzusteuern. Sollte dies nicht der Fall sein, kann im Rahmen des Programmiervorgangs wiederum eine Fehlermeldung abgesetzt werden. Zudem kann eine solche Elementbeschreibung Informationen über alle vorhandenen Anschlussklemmen und/oder über die physikalische Anordnung der Anschlussklemmen eines Moduls beinhalten.

Bei einer bevorzugten Ausführungsform kann aufgrund der Elementbeschreibung eines Moduls auch eine spezielle Konfiguration eines Gebers oder Aktors vorgenommen werden. Wenn beispielsweise eine Eingangsanschlussklemme eines Moduls ein Testsignal mit bestimmten Testpulsen von einem Geber fordert und der Geber unterschiedliche Testpulse liefern kann, ist es möglich, den Geber durch das Programmiergerät so zu konfigurieren, dass er die von der Eingangsanschlussklemme des Moduls geforderten Testpulse liefert.

Aufgrund des erfindungsgemäßen Verdrahtungsplans und allen vorhandenen Elementbeschreibungen liegt im Programmiergerät eine Komplettinformation bezüglich des konkreten Gesamtsystems vor, die insbesondere bei der auf das erfindungsgemäße Verfahren folgenden Logikprogrammierung sehr vorteilhaft verwertet werden kann. Im Rahmen der Logikprogrammierung wird festgelegt, welche der ausgewerteten Gebersignale in welcher Weise logisch miteinander verknüpft werden sollen und welchen Aktoren die Verknüpfungsergebnisse zuzuordnen sind. Durch die genannte Komplettinformation ist bei der Logikprogrammierung bekannt, welche Anschlussklemmen der Sicherheitssteuerung mit welchen Gebern und Aktoren verbunden sind und welche Eigenschaften die entsprechenden Ein- und Ausgangssignale der Sicherheitssteuerung haben. So kann die vorgenommene Logikprogrammierung problemlos automatisch auf Plausibilität geprüft werden, wodurch Fehlprogrammierungen wirksam verhindert werden.

Das Programmtool für die Durchführung der erfindungsgemäßen Programmierung kann bevorzugt in einem Speicher der Sicherheitssteuerung hinterlegt und vor dem Beginn des Programmierens in ein Programmiergerät geladen werden. Als Programmiergerät können auch in diesem Fall beispielsweise PCs, Laptops oder Handheld-Geräte eingesetzt werden. Das Laden des Programmiertools aus der Sicherheitssteuerung in ein Programmiergerät bedingt auf vorteilhafte Weise, dass vor Durchführung der Programmierung keine separate Installation des Programmiertools auf dem Programmiergerät nötig ist, da sich das Programmiergerät beim Anschluss der Sicherheitssteuerung das Programmiertool selbsttätig laden kann.

Weitere bevorzugte Ausführungsformen der Erfindung sind in den Unteransprüchen erläutert.

Die Erfindung wird nachfolgend anhand von Ausführungsbeispielen unter Bezugnahme auf die Zeichnungen beschrieben; in diesen zeigen:
- Fig. 1: eine schematische Ansicht einer erfindungsgemäßen Programmieroberfläche,
- Fig. 2: einen erfindungsgemäß ausgedruckten Verdrahtungs- plan,
- Fig. 3: eine erfindungsgemäß einsetzbare Bibliothek von Programmteilen, und
- Fig. 4: ein erfindungsgemäß erstelltes Programm.

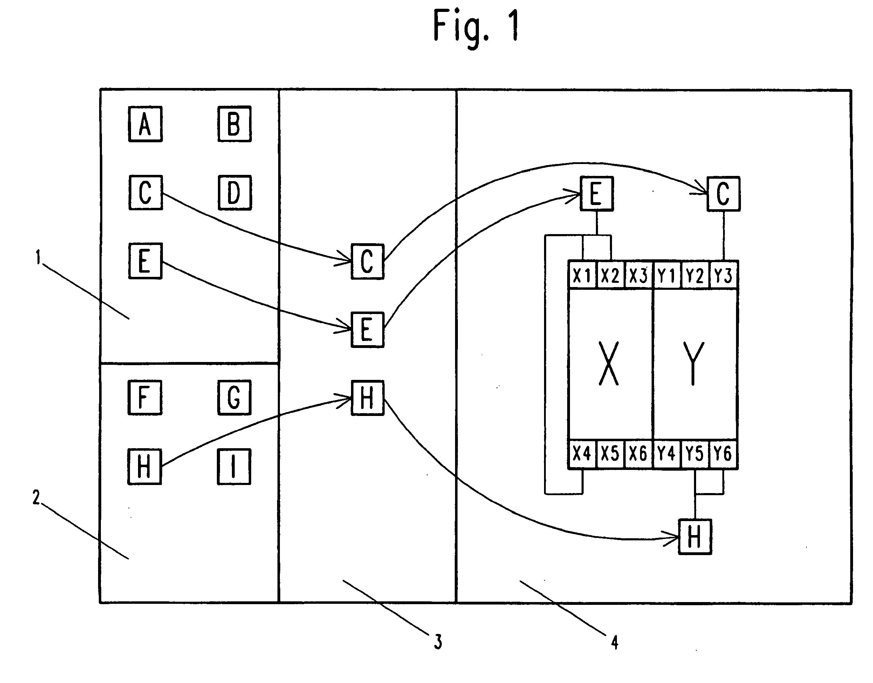

Der linke Bereich des Bildschirms gemäß Fig. 1 ist in einen oberen Bereich 1 und einen unteren Bereich 2 unterteilt, wobei im oberen Bereich 1 fünf Gebersymbole A bis E und im unteren Bereich 2 vier Aktorsymbole F bis I dargestellt sind. Rechts an die Bereiche 1 und 2 schließt sich ein Auswahlfeld 3 an, in welches Gebersymbole und Aktorsymbole aus den Bereichen 1 und 2 mittels Drag and Drop gezogen werden können. Im Auswahlbereich 3 stehen Geber- und Aktorsymbole dann für eine Verdrahtung zur Verfügung.

Im rechten Bildschirmbereich 4 ist eine aus zwei Modulen X und Y bestehende Sicherheitssteuerung dargestellt, wobei das Modul X sechs Anschlussklemmen X1 bis X6 und das Modul Y ebenfalls sechs Anschlussklemmen Y 1 bis Y6 aufweist. Die Module X, Y der Sicherheitssteuerung können auch mittels eines geeigneten Verfahrens ausgewählt und im Bildschirmbereich 4 platziert werden, so dass sich im Prinzip beliebig aus unterschiedlichen Modulen aufgebaute Sicherheitssteuerungen zusammenstellen lassen.

Bei dem in Fig. 1 dargestellten Ausführungsbeispiel wurden die Gebersymbole C und E sowie das Aktorsymbol H aus den Bereichen 1 und 2 ausgewählt und mittels Drag and Drop in den Auswahlbereich 3 gezogen. Das Gebersymbol C wird dann mittels Drag and Drop aus dem Auswahlfeld 3 in den Bereich der Anschlussklemme Y3 des Moduls Y gezogen, woraufhin zwischen dem Gebersymbol C und der Anschlussklemme Y3 automatisch ein Verdrahtungssymbol in Form einer Linie dargestellt wird. Dabei ist dem Gebersymbol C eine Elementbeschreibung zugeordnet, welche angibt, dass es sich hier um einen einkanaligen Schalter handelt, welcher an einen beliebigen Digitaleingang einer Sicherheitssteuerung angeschlossen werden kann. Im Rahmen des erfindungsgemäßen Programmierens wird dann überprüft, ob es sich bei der ausgewählten Anschlussklemme Y3 um einen Digitaleingang handelt. Wenn dies der Fall ist, wird eine entsprechende Verdrahtung zugelassen und das genannte Verdrahtungssymbol zwischen dem Gebersymbol C und der Anschlussklemme Y3 dargestellt.

Anschließend wird dann das Gebersymbol E mittels Drag and Drop aus dem Auswahlfeld 3 in den Bereich der Anschlussklemmen X1, X2 des Moduls X gezogen und dort platziert. Dem Gebersymbol E ist eine Elementbeschreibung hinterlegt, welche angibt, dass es sich hier um einen zweikanaligen getesteten Schalter handelt. Dementsprechend wird beim Platzieren des Gebersymbols E erfindungsgemäß automatisch überprüft, ob es sich bei den Anschlussklemmen X1 und X2 des Moduls X um geeignete Eingänge handelt. Ferner wird automatisch der Ausgang X4 des Moduls X als Testausgang ausgewählt, welcher dann ebenfalls mit dem Gebersymbol E verdrahtet wird. So ergibt sich letztlich eine zulässige Verdrahtung des Gebersymbols E mit den beiden Eingängen X1 und X2 sowie mit dem Ausgang X4 des Moduls X.

Schließlich wird das Aktorsymbol H, welches gemäß seiner Elementbeschreibung ein zweikanaliges Relais betrifft, in dem Bereich der Ausgänge Y5, Y6 des Moduls Y gezogen. Hier wird wiederum überprüft, ob es sich bei den Anschlussklemmen Y5 und Y6 um geeignete Ausgänge handelt, woraufhin bei positiv abgeschlossenem Test Verdrahtungssymbole zwischen dem Aktorsymbol H und den Anschlussklemmen Y5, Y6 des Moduls Y dargestellt werden.

Um bei den vorstehend erläuterten Verfahrensschritten jeweils überprüfen zu können, ob es sich bei den Ein- und Ausgängen X1, X2, X4, Y3, Y5 und Y6 um jeweils für die gewählte Verdrahtung geeignete Eingänge bzw. Ausgänge handelt, ist den Modulen X und Y der Sicherheitssteuerung auch jeweils eine dem Programmiergerät bekannte Elementbeschreibung hinterlegt, welche alle Eingänge und Ausgänge der Module X und Y spezifiziert.

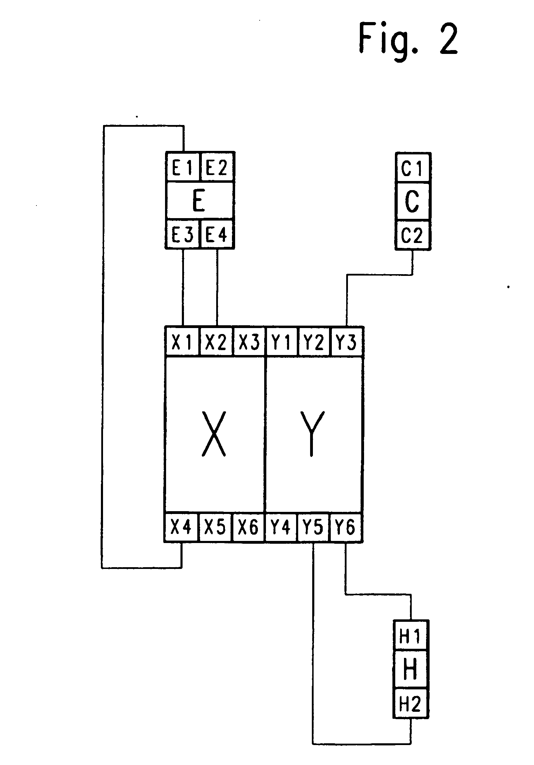

Nachdem durch die vorstehend erläuterten Verfahrensschritte das Erstellen des Verdrahtungsplans abgeschlossen wurde, kann dieser auf Basis der im Programmiergerät erzeugten Information ausgedruckt werden, wobei die Form des Verdrahtungsplans der Darstellung gemäß Fig. 2 entsprechen kann.

Im Unterschied zum Bildschirmbereich 4 gemäß Fig. 1 werden beim Verdrahtungsplan gemäß Fig. 2 die Geber C und E sowie der Aktor H jeweils mit ihren physikalisch vorhandenen Anschlussklemmen dargestellt, so dass dem Anwender zusätzlich klar wird, welche Anschlussklemmen der Geber C, E und des Aktors H jeweils mit den ausgewählten Anschlussklemmen der Module X und Y verbunden werden müssen. Die Auswahl der konkreten Anschlussklemmen der Geber C, E und des Aktors H erfolgt wiederum anhand der den Gebersymbolen C, E und dem Aktorsymbol H hinterlegten Elementbeschreibungen. Diese Elementbeschreibungen spezifizieren nämlich die Funktionen aller Anschlussklemmen der Geber C, E und des Aktors H.

Aufgrund der gemäß Fig. 1 vorgenommenen Verdrahtung liegt dem Anwender also mit dem Ausdruck gemäß Fig. 2 ein kompletter Verdrahtungsplan vor, aufgrund dessen alle erforderlichen Komponenten C, E, H, X und Y miteinander verdrahtet werden können.

Erfindungsgemäß wird nun aus der gemäß Fig. 1 in das Programmiergerät eingegebenen Information auch gleich derjenige Programmteil eines Programms zum Betrieb der Sicherheitssteuerung X, Y erstellt, welcher für die Auswertung der Signale der Geber C, E und für die Ansteuerung des Aktors H zuständig ist.

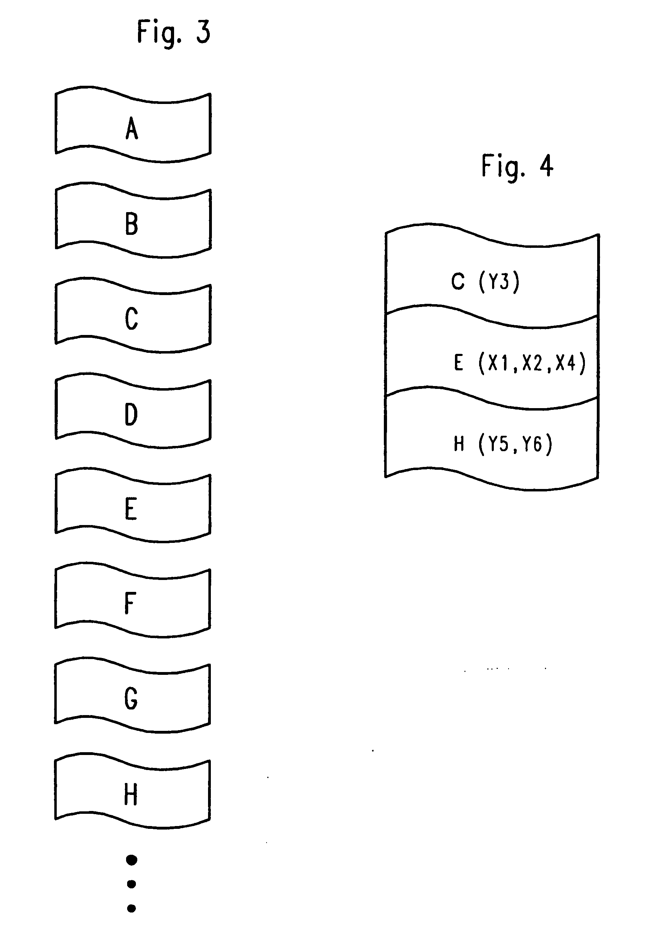

Zu diesem Zweck existiert im Programmiergerät eine Bibliothek von Programmteilen gemäß Fig. 3, wobei jedem Gebersymbol A bis E und jedem Aktorsymbol F bis I gemäß Fig. 1 jeweils ein Programmteil A bis I zugeordnet ist. Durch das Bewegen der Symbole C, E und H in das Auswahlfeld 3 gemäß Fig. 1 kann das Programmiergerät die in der Bibliothek gemäß Fig. 3 vorhandenen Programmteile C, E und H bereits zu einem Programmteil gemäß Fig. 4 zusammenstellen. Ein solcher Programmteil gemäß Fig. 4 ist dann grundsätzlich dazu in der Lage, die Signale der Geber C und E auszuwerten und den Aktor H anzusteuern. Allerdings ist nach einem Bewegen der Symbole C, E und H in das Auswahlfeld 3 noch nicht klar, welche Anschlussklemmen der Sicherheitssteuerung X, Y konkret ausgewertet bzw. angesteuert werden müssen.

Dies wird dann jedoch definiert durch die im Bildschirmbereich 4 gemäß Fig. 1 vorgenommene Verdrahtung. Aufgrund dieser Verdrahtung ist klar, dass das Programmteil C gemäß Fig. 4 den Eingang Y3 des Moduls Y auswerten muss, so dass dem Programmteil C in automatisierter Weise vom Programmgerät der Eingangsparameter Y3 zugeordnet werden kann. In entsprechender Weise werden dem Programmteil E die Eingangsparameter X1 un X2 sowie der Ausgangsparameter X4 zugeordnet. Bezüglich des Programmteils H erfolgt eine Zuordnung der Ausgangsparameter Y5 und Y6.

Bei einer alternativen Ausführungsform der Erfindung liegen in der Programmbibliothek gemäß Fig. 3 nicht für jedes Symbol A bis I separate Programmteile vor, sondern es werden Programmteile zur Verfügung gestellt, die mehreren unterschiedlichen Symbolen zugeordnet werden können. Beispielsweise können die Programmteile A, B zu einem einzigen Programmteil AB zusammengefasst werden, welches sowohl einen einkanaligen Schalter A als auch einen zweikanaligen Schalter B auswerten kann. Wenn dann der zweikanalige Schalter B mit der Sicherheitssteuerung verdrahtet wird, wählt das Programmiergerät in automatisierter Weise das Programmteil AB aus und konfiguriert es mittels geeigneter Parameter derart, dass es für die Auswertung eines zweikanaligen Schalters geeignet ist. Alternativ könnte bei Verdrahtung des einkanaligen Schalters A eine Konfiguration dergestalt erfolgen, dass das Programmteil AB zur Auswertung eines einkanaligen Schalters geeignet ist.

## Patentansprüche

1. Verfahren zum Programmieren einer mit Gebern (A-E) und Aktoren (F-I) zu verschaltenden Sicherheitssteuerung (X, Y),
**dadurch gekennzeichnet,**
**dass** zuerst ein Verdrahtungsplan erstellt wird, indem
- die Sicherheitssteuerung (X, Y) mit ihren Anschlussklemmen (X1-X6, Y1-Y6) zumindest schematisch auf einer graphischen Programmieroberfläche (1-4) dargestellt wird,
- Geber (C, E) und Aktoren (H) anhand von Geber- und Aktorsymbolen (A-I) ausgewählt werden, und
- Verdrahtungssymbole auf der Programmieroberfläche (1-4) dargestellt werden, welche die Geber- und Aktorsymbole (C, E, H) mit den ihnen zugeordneten Anschlussklemmen (X1, X2, X3, Y3, Y5, Y6) verbinden,
woraufhin ein Programm konfiguriert und/oder erstellt wird, indem
- automatisch Programmteile (C, E, H) aktiviert und/oder zusammengestellt werden, die für die Auswertung der ausgewählten Geber (C, E) und die Ansteuerung der ausgewählten Aktoren (H) vorgesehen sind, und
- diesen Programmteilen (C, E, H) automatisch Parameter (X1, X2, X3, Y3, Y5, Y6) zugeordnet werden, welche denjenigen Anschlussklemmen (X1, X2, X3, Y3, Y5, Y6) entsprechen, mit denen die jeweiligen Geber- und Aktorsymbole (C, E, H) verbunden sind.

2. Verfahren nach Anspruch 1,
**dadurch gekennzeichnet,**
**dass** die Relativpositionen der auf der graphischen Programmieroberfläche (1-4) dargestellten Anschlussklemmen (X1-X6, Y1-Y6) deren tatsächlichen physikalischen Relativpositionen entsprechen.

3. Verfahren nach einem der vorhergehenden Ansprüche,
**dadurch gekennzeichnet,**
**dass** ein physikalisches Abbild der Sicherheitssteuerung (X, Y) mit ihren Anschlussklemmen (X1-X6, Y1-Y6) auf der graphischen Programmieroberfläche (1-4) dargestellt wird.

4. Verfahren nach einem der vorhergehenden Ansprüche,
**dadurch gekennzeichnet,**
**dass** eine Menge von verfügbaren Geber- und/oder Aktorsymbolen (A-I) auf der Programmieroberfläche (1-4) dargestellt wird und aus dieser Menge diejenigen Geber- und/oder Aktorsymbole (C, E, H) ausgewählt werden, welche den jeweils benötigten Gebern (C, E) und/oder Aktoren (H) entsprechen.

5. Verfahren nach einem der vorhergehenden Ansprüche,
**dadurch gekennzeichnet,**
**dass** nach erfolgter Auswahl der Geber- und/oder Aktorsymbole (C, E, H) automatisch die Verdrahtungssymbole auf der Programmieroberfläche (1-4) dargestellt werden.

6. Verfahren nach einem der vorhergehenden Ansprüche,
**dadurch gekennzeichnet,**
**dass** die dargestellten Anschlussklemmen der Sicherheitssteuerung mehreren physikalisch voneinander getrennten Einheiten der Sicherheitssteuerung zugeordnet sind.

7. Verfahren nach einem der vorhergehenden Ansprüche,
**dadurch gekennzeichnet,**
**dass** nach dem Erstellen des Verdrahtungsplans ein Ausdrucken oder Anzeigen dieses Plans erfolgt, wobei auf dem Plan sämtliche
Anschlussklemmen (X1-X6, Y1-Y6, C1, C2, E1-E4, H1, H2) von Sicherheitssteuerung (X, Y), Gebern (C, E) und Aktoren (H), jeweils entsprechend ihrer physikalischen Anordnung, einschließlich der gewählten Verbindungen zwischen diesen Anschlussklemmen (X1-X6, Y1-Y6, C1, C2, E1-E4, H1, H2) dargestellt sind.

8. Verfahren nach einem der vorhergehenden Ansprüche,
**dadurch gekennzeichnet,**
**dass** jedem Geber (A-E) und jedem Aktor (F-I) in Form eines Datensatzes eine geber- oder aktorspezifische Elementbeschreibung zugeordnet ist, welche Eigenschaften des jeweiligen Gebers (A-E) oder Aktors (F-I) definiert.

9. Verfahren nach Anspruch 8,
**dadurch gekennzeichnet,**
**dass** in Abhängigkeit von der Elementbeschreibung ein Programmteil (C, E, H) aktiviert wird, welcher den jeweiligen Geber (C, E) oder Aktor (H) auswertet oder ansteuert.

10. Verfahren nach einem der Ansprüche 8 oder 9,
**dadurch gekennzeichnet,**
**dass** aus der Elementbeschreibung Parameter abgeleitet werden, die einen Programmteil konfigurieren, der den jeweiligen Geber oder Aktor auswertet oder ansteuert.

11. Verfahren nach einem der vorhergehenden Ansprüche,
**dadurch gekennzeichnet,**
**dass** dem aktivierten oder konfigurierten Programmteil (C, E, H) Parameter (X1, X2, X3, Y3, Y5, Y6) zugeordnet werden, die denjenigen Anschlussklemmen (X1, X2, X3, Y3, Y5, Y6) der Sicherheitssteuerung entsprechen, an die der jeweilige Geber (C, E) oder Aktor (H) angeschlossen ist.

12. Verfahren nach einem der Ansprüche 8 bis 11,
**dadurch gekennzeichnet,**
**dass** die Elementbeschreibungen in einem Programmiergerät gespeichert sind oder
**dass** die Elementbeschreibungen in den zugehörigen Gebern (A-E) und Aktoren (F-I) gespeichert sind, von wo aus sie zum Zweck des Programmierens in ein Programmiergerät übertragen werden.

13. Verfahren nach einem der Ansprüche 8 bis 12,
**dadurch gekennzeichnet,**
**dass** die Elementbeschreibung der Geber (A-E) zumindest eine der im Folgenden genannten geberspezifischen Informationen beinhaltet:
Anzahl der auszuwertenden Kanäle,
Anforderungen an die anzuschließenden Eingangsklemmen der Sicherheitssteuerung,
Art der Auswertung (äquivalent/ambivalent), Testkonfiguration,
vorhandene Anschlussklemmen,
physikalische Anordnung der Anschlussklemmen,
Geberkennzeichnung.

14. Verfahren nach Anspruch 13,
**dadurch gekennzeichnet,**
**dass** die Information "Testkonfiguration" festlegt, mit wie vielen und/oder welchen Ausgangsanschlussklemmen (X4) der Sicherheitssteuerung (X, Y) der Geber (E) zu verdrahten ist.

15. Verfahren nach einem der Ansprüche 8 bis 14,
**dadurch gekennzeichnet,**
**dass** die Elementbeschreibung der Aktoren (F-I) zumindest eine der im Folgenden genannten aktorspezifischen Informationen beinhaltet:
Anzahl der anzusteuernden Kanäle,
Anforderungen an die anzuschließenden Ausgangsklemmen der Sicherheitssteuerung,
Art der Ansteuerung (äquivalent/ambivalent),
vorhandene Anschlussklemmen,
physikalische Anordnung der Anschlussklemmen,
Aktorkennzeichnung.

16. Verfahren nach einem der vorhergehenden Ansprüche,
**dadurch gekennzeichnet,**
**dass** zumindest einem Modul (X, Y) der Sicherheitssteuerung in Form eines Datensatzes eine modulspezifische Elementbeschreibung zugeordnet ist, welche Eigenschaften des jeweiligen Moduls (X, Y) definiert.

17. Verfahren nach Anspruch 16,
**dadurch gekennzeichnet,**
**dass** aufgrund der Elementbeschreibung eines Moduls (X, Y) eine Konfiguration eines Gebers (C, E) oder eines Aktors (H) in Abhängigkeit von Eigenschaften des Moduls (X, Y) vorgenommen wird.

18. Verfahren nach einem der vorhergehenden Ansprüche,
**dadurch gekenntzeichnet**,
dass das Programmtool für die Durchführung der Programmierung in einem Speicher der Sicherheitssteuerung (X, Y) hinterlegt und vor dem Beginn des Programmierens in ein Programmiergerät, insbesondere einen PC, eine Laptop oder ein Handheld-Gerät geladen wird.

## Claims

1. A method for the programming of a safety controller (X, Y) to be interconnected with encoders (A-E) and actuators (F-I), **characterized in that**
a wiring plan is first prepared **in that**
- the safety controller (X, Y) is shown with its connection terminals (X1-X6, Y1-Y6) at least schematically on a graphics programming interface (1-4);
- the encoders (C, E) and actuators (H) are selected with reference to encoder symbols and actuator symbols (A-I); and
- wiring symbols are shown on the programming interface (1-4) which connect the encoder symbols and actuator symbols (C, E, H) to the connection terminals (X1, X2, X3, Y3, Y5, Y6) associated with them,
whereupon a program is configured and/or prepared **in that**
- program parts (C, E, H) are automatically activated and/or compiled which are provided for the evaluation of the selected encoders (C, E) and for the control of the selected actuators (H); and
- parameters (X1, X2, X3, Y3, Y5, Y6) are automatically associated with these program parts (C, E, H) which correspond to those connection terminals (X1, X2, X3, Y3, Y5, Y6) with which the respective encoder symbols and actuator symbols (C, E, H) are associated.

2. A method in accordance with claim 1, **characterized in that** the relative positions of the connection terminals (X1-X6, Y1-Y6) shown on the graphics programming interface (1-4) correspond to their actual physical relative positions.

3. A method in accordance with any one of the preceding claims, **characterized in that** a physical model of the safety controller (X, Y) with its connection terminals (X1-X6, Y1-Y6) is shown on the graphics programming interface (1-4).

4. A method in accordance with any one of the preceding claims, **characterized in that** a set of available encoder symbols and/or actuator symbols (A-I) is shown on the programming interface (1-4) and those encoder symbols and/or actuator symbols (C, E, H) are selected from this set which correspond to the respective required encoders (C, E) and/or actuators (H).

5. A method in accordance with any one of the preceding claims, **characterized in that** the wiring symbols are automatically shown on the programming interface (1-4) after the selection of the encoder symbols and/or actuator symbols (C, E, H) has taken place.

6. A method in accordance with any one of the preceding claims, **characterized in that** the shown connection terminals of the safety controller are associated with a plurality of units of the safety controller physically separate from one another.

7. A method in accordance with any one of the preceding claims, **characterized in that**, after the preparation of the wiring plan, a printing out or display of this plan takes place, with all the connection terminals (X1-X6, Y1-Y6, C1, C2, E1-E4, H1, H2) of the safety controller (X, Y), encoders (C, E) and actuators (H) being
shown on the plan, in each case according to their physical arrangement, including the selected connections between these connection terminals (X1-X6, Y1-Y6, C1, C2, E1-E4, H1, H2).

8. A method in accordance with any one of the preceding claims, **characterized in that** an encoder-specific or actuator specific element description is associated with each encoder (A-E) and with each actuator (F-I) in the form of a data set, said element description defining properties of the respective encoder (A-E) or actuator (F-I).

9. A method in accordance with claim 8, **characterized in that** a program part (C, E, H) is activated in dependence on the element description and evaluates or controls the respective encoder (C, E) or actuator (H).

10. A method in accordance with one of the claims 8 or 9, **characterized in that** parameters are derived from the element description which configure a program part which evaluates or controls the respective encoder or actuator.

11. A method in accordance with any one of the preceding claims, **characterized in that** parameters (X1, X2, X3, Y3, Y5, Y6) are associated with the activated or configured program part (C, E, H) which correspond to those connection terminals (X1, X2, X3, Y3, Y5, Y6) of the safety controller to which the respective encoder (C, E) or actuator (H) is connected.

12. A method in accordance with any one of the claims 8 to 11, **characterized in that** the element descriptions are stored in a programming device; or **in that** the element descriptions are stored in the associated encoders (A-E) and actuators (F-I) from where they are transferred to a programming device for the purpose of programming.

13. A method in accordance with any one of the claims 8 to 12, **characterized in that** the element description of the encoders (A-E) includes at least one of the encoder-specific pieces of information named in the following:
Number of the channels to be evaluated;
Demands on the input terminals of the safety controller to be connected;
Type of the evaluation (equivalent/ambivalent);
Test configuration;
Present connection terminals;
Physical arrangement of the connection terminals;
Encoder marking.

14. A method in accordance with claim 13, **characterized in that** the information "test configuration" lays down how many and/or which output connection terminals (X4) of the safety controller (X, Y) the encoder (E) has to be wired with.

15. A method in accordance with any one of the claims 8 to 14, **characterized in that** the element description of the actuators (F-I) includes at least one of the actuator-specific pieces of information named in the following:
Number of the channels to be evaluated;
Demands on the output terminals of the safety controller to be connected;
Type of the control (equivalent/ambivalent);
Present connection terminals;
Physical arrangement of the connection terminals;
Actuator marking.

16. A method in accordance with any one of the preceding claims, **characterized in that** a module-specific element description which defines properties of the respective module (X, Y) is associated with at least one module (X, Y) of the safety controller in the form of a data set.

17. A method in accordance with claim 16, **characterized in that** a configuration of an encoder (C, E) or of an actuator (H) is carried out on the basis of the element description of a module (X, Y) in dependence on properties of the module (X, Y).

18. A method in accordance with any one of the preceding claims, **characterized in that** the program tool for the carrying out of the programming is deposited in a memory of the safety controller (X, Y) and is loaded into a programming device, in particular a PC, a laptop or a handheld, before the start of the programming.

## Revendications

1. Procédé pour programmer une commande de sécurité (X, Y) avec des capteurs (A-E) et des acteurs (F-I) à câbler,
**caractérisé en ce que**
on établit tout d'abord un plan de câblage,
- en représentant la commande de sécurité (X, Y) avec ses bornes de connexion (X1-X6, Y1-Y6) au moins schématiquement sur une interface graphique de programmation (1-4),
- en choisissant des capteurs (C, E) et des acteurs (H) au moyen de symboles de capteurs et de symboles d'acteurs (A-I), et
- en représentant des symboles de câblage sur l'interface de programmation (1-4) qui raccordent les symboles de capteurs et les symboles d'acteurs (C, E, H) aux bornes de connexion (X1, X2, X3, Y3, Y5, Y6) qui leur sont associées,
suite à quoi on configure et/ou on établit un programme,
- en activant et/ou en regroupant automatiquement des parties de programmes (C, E, H) qui sont prévues pour l'exploitation des capteurs choisis (C, E) et pour le pilotage des acteurs choisis (H), et
- en associant à ces parties de programmes (C, E, H) automatiquement des paramètres (X1, X2, X3, Y3, Y5, Y6) qui correspondent à ceux des bornes de connexion (X1, X2, X3, Y3, Y5, Y6) avec lesquelles les symboles de capteurs et les symboles d'acteurs respectifs (C, E, H) sont reliés.

2. Procédé selon la revendication 1,
**caractérisé en ce que** les positions relatives des bornes de connexion (X1-X6, Y1-Y6) illustrées sur l'interface graphique de programmation (1-4) correspondent à leurs positions relatives physiques effectives.

3. Procédé selon l'une des revendications précédentes,
**caractérisé en ce que** l'on représente sur l'interface graphique de programmation (1-4) une image physique de la commande de sécurité (X, Y) avec ses bornes de connexion (X1-X6, Y1-Y6).

4. Procédé selon l'une des revendications précédentes,
**caractérisé en ce que** l'on représente sur l'interface de programmation (1-4) un groupe de symboles de capteurs et/ou de symboles d'acteurs (A-I) disponibles et **en ce que** l'on choisit à partir de ce groupe ceux des symboles de capteurs et/ou des symboles d'acteurs (C, E, H) qui correspondent aux capteurs (C, E) et/ou aux acteurs (H) respectivement nécessaires.

5. Procédé selon l'une des revendications précédentes,
**caractérisé en ce qu'**après avoir effectué un choix des symboles de capteurs et/ou d'acteurs (C, E, H), les symboles de câblage sont automatiquement représentés sur l'interface de programmation (1-4).

6. Procédé selon l'une des revendications précédentes,
**caractérisé en ce que** les bornes de connexion illustrées de la commande de sécurité sont associées à plusieurs unités, physiquement séparées les unes des autres, de la commande de sécurité.

7. Procédé selon l'une des revendications précédentes,
**caractérisé en ce qu'**après avoir établi le plan de câblage on effectue une impression ou un affichage de ce plan, de telle sorte que sur le plan on illustre la totalité des bornes de connexion (X1-X6, Y 1-Y6, C1, C2, E1-E4, H1, H2) de la commande de sécurité (X, Y), des capteurs (C, E) et des acteurs (H), respectivement en correspondance de leur agencement physique, y compris les liaisons choisies entre les bornes de connexion (X1-X6, Y 1-Y6, C1, C2, E1-E4, H1, H2).

8. Procédé selon l'une des revendications précédentes,
**caractérisé en ce qu'**à chaque capteur (A-E) et à chaque acteur (F-I) on associe, sous la forme d'un jeu de données, une description élémentaire spécifique au capteur ou spécifique à l'acteur, qui définit les propriétés du capteur (A-E) ou de l'acteur (F-I) respectif.

9. Procédé selon la revendication 8,
**caractérisé en ce que**, en fonction de la description élémentaire, on active une partie de programme (C, E, H) qui exploite le capteur respectif (C, E) ou qui pilote l'acteur respectif (H).

10. Procédé selon l'une des revendications 8 ou 9,
**caractérisé en ce que**, à partir de la description élémentaire, on dérive des paramètres qui configurent une partie de programme qui exploite le capteur respectif ou qui pilote l'acteur respectif.

11. Procédé selon l'une des revendications précédentes,
**caractérisé en ce que** l'on associe à la partie de programme activée ou configurée (C, E, H) des paramètres (X1, X2, X3, Y3, Y5, Y6) qui correspondent à ceux des bornes de connexion (X1, X2, X3, Y3, Y5, Y6) de la commande de sécurité auxquelles le capteur (C, E) ou l'acteur (H) respectif est connecté.

12. Procédé selon l'une des revendications 8 à 11,
**caractérisé en ce que** les descriptions élémentaires sont mémorisées dans les capteurs (A-E) et les acteurs (F-I) associés, d'où elles sont transmises à un appareil de programmation dans le but de la programmation.

13. Procédé selon l'une des revendications 8 à 12,
**caractérisé en ce que** la description élémentaire des capteurs (A-E) contient au moins une des informations spécifiques aux capteurs citées dans ce qui suit :
nombre des canaux à exploiter,
exigences quant aux bornes d'entrée de la commande de sécurité à connecter,
type d'exploitation (équivalente/ambivalente),
configuration de test,
bornes de connexion existantes,
agencement physique des bornes de connexion,
désignation des capteurs.

14. Procédé selon la revendication 13,
**caractérisé en ce que** l'information "configuration de test" impose le nombre et/ou lesquelles des bornes de connexion de sortie (X4) de la commande sécurité (X, Y) qu'il faut câbler avec le capteur (E).

15. Procédé selon l'une des revendications 8 à 14,
**caractérisé en ce que** la description élémentaire des acteurs (F-I) contient l'une au moins des informations spécifiques aux acteurs citées dans ce qui suit :
nombre des canaux à piloter,
exigences quant aux bornes de sortie à connecter de la commande de sécurité,
type du pilotage (équivalent/ambivalent),
bornes de connexion existantes,
agencement physique des bornes connexion,
désignation des acteurs.

16. Procédé selon l'une des revendications précédentes,
**caractérisé en ce qu'**une description élémentaire spécifique à un module est associée à au moins un module (X, Y) de la commande sécurité sous la forme d'un jeu de données qui définit des propriétés du module respectif (X, Y).

17. Procédé selon la revendication 16,
**caractérisé en ce que**, en se basant sur la description élémentaire d'un module (X, Y), on effectue une configuration d'un capteur (C, E) ou d'un acteur (H) en dépendance des propriétés du module (X, Y).

18. Procédé selon l'une des revendications précédentes,
**caractérisé en ce que** l'outil de programmation pour l'exécution de la programmation est déposé dans une mémoire de la commande de sécurité (X, Y) et est chargé avant le commencement de la programmation, dans un appareil de programmation, en particulier un ordinateur personnel, un ordinateur portable ou un appareil tenu à la main.
